# EUROPÄISCHE PATENTANMELDUNG

(11) **EP 4 804 222 A1**
(43) Veröffentlichungstag der Anmeldung: **09.09.2026**
(21) Anmeldenummer: 26161797.1
(22) Anmeldetag: 02.03.2026
(51) Int. Cl.: H01G 4/228, H01G 4/232, H01G 4/38, H01G 4/40, H01G 4/224

(54) **KONDENSATORMODUL UND SCHALTUNGSANORDNUNG**

(30) Priorität: 07.03.2025 DE 102025108832
(71) Anmelder: Volkswagen Aktiengesellschaft, 38440 Wolfsburg (DE)
(72) Erfinder: Schiedermeier, Maximilian, 38440 Wolfsburg (DE); Hartwig, Raphael, 38440 Wolfsburg (DE); Sommer, Christian, 38440 Wolfsburg (DE)

(57) **Zusammenfassung**

Die Erfindung betrifft ein Kondensatormodul (1), wobei das Kondensatormodul (1) mindestens drei als Wickel (5) ausgebildete Kondensatoren (C1a, C1b, C2) aufweist, wobei die Wickel (5) jeweils an den Stirnseiten (7) eine Elektrode (8) aufweisen und die Mantelfläche (6) der Wickel (5) elektrisch isoliert ist, wobei das Kondensatormodul (1) ein erstes Kontaktteil (2), ein zweites Kontaktteil (3) und ein drittes Kontaktteil (4) aufweist, wobei das erste Kontaktteil (2) zum Anschließen an ein positives Potential (DC+), das zweite Kontaktteil (3) zum Anschließen an ein negatives Potential (DC-) und das dritte Kontaktteil (4) einen Mittelabgriff (M) bildet, wobei mindestens ein Wickel (5) zwischen dem ersten Kontaktteil (2) und dem dritten Kontaktteil (4), mindestens ein Wickel (5) zwischen dem dritten Kontaktteil (4) und dem zweiten Kontaktteil (3) und mindestens ein Wickel (5) zwischen dem ersten Kontaktteil (2) und dem zweiten Kontaktteil (3) angeordnet ist, wobei die Wickel (5) zwischen dem ersten Kontaktteil (2) und dem dritten Kontaktteil (3) und die Wickel (5) zwischen dem dritten Kontaktteil (4) und dem zweiten Kontaktteil (3) gleich aufgebaut sind und eine erste Foliendicke (d1) aufweisen, wobei der mindestens eine Wickel (5) zwischen dem ersten Kontaktteil (2) und dem zweiten Kontaktteil (3) eine zweite Foliendicke (d2) aufweist, wobei die zweite Foliendicke (d2) kleiner als die doppelte erste Foliendicke (d1) ist.

## Beschreibung

Die Erfindung betrifft ein Kondensatormodul und eine Schaltungsanordnung.

Kondensatormodule weisen eine Vielzahl von Kondensatoren auf, die häufig als Wickel ausgebildet sind. Dabei weisen die Wickel an ihren Stirnseiten Elektroden auf, über die diese von Kontaktteilen kontaktiert werden können, wobei die Mantelflächen der Wickel elektrisch isoliert sind. Die Wickel können sehr kompakt in einer Reihe oder als Matrix angeordnet werden, wobei dann ein Kontaktteil die Elektroden der einen Stirnseite und ein anderes Kontaktteil die Elektroden der anderen Stirnseite kontaktieren kann, sodass die Wickel elektrisch parallel verbunden sind, sodass sich deren Kapazität addiert. Ein Anwendungsfall für ein solches Kondensatormodul ist ein Zwischenkreiskondensator eines Wechselrichters. In diesem Fall werden dann die Kontaktteile mit einem positiven und einem negativen Anschluss des Wechselrichters verbunden.

In verschiedenen Anwendungen benötigt man Reihenschaltungen von Kondensatoren mit einem Mittelabgriff, beispielsweise wenn der Zwischenkreiskondensator für einen 3-Level-Wechselrichter verwendet werden soll. Aber auch in anderen Schaltungskonfigurationen benötigt man Reihenschaltungen von Kondensatoren. Eine Lösung wäre, zwei bekannte Kondensatormodule in Reihe zu schalten.

Der Erfindung liegt das technische Problem zugrunde, ein kompaktes Kondensatormodul mit einem Mittelabgriff zu schaffen sowie eine Schaltungsanordnung mit einem 3-Level-Wechselrichter und einem Zwischenkreiskondensator zur Verfügung zu stellen.

Die Lösung des technischen Problems ergibt sich durch ein Kondensatormodul mit den Merkmalend es Anspruchs 1 sowie eine Schaltungsanordnung mit den Merkmalen des Anspruchs 8. Weitere vorteilhafte Ausgestaltungen der Erfindung ergeben sich aus den Unteransprüchen.

Hierzu weist das Kondensatormodul mindestens drei als Wickel ausgebildete Kondensatoren auf, wobei die Wickel jeweils an den Stirnseiten eine Elektrode aufweisen und die Mantelfläche der Wickel elektrisch isoliert ist. Weiter weist das Kondensatormodul ein erstes Kontaktteil, ein zweites Kontaktteil und ein drittes Kontaktteil auf. Das erste Kontaktteil dient zum Anschließen an ein positives Potential und das zweite Kontaktteil dient zum Anschließen an ein negatives Potential, wobei das dritte Kontaktteil einen Mittelabgriff bildet. Dabei ist mindestens ein Wickel zwischen dem ersten Kontaktteil und dem dritten Kontaktteil und mindestens ein Wickel zwischen dem dritten Kontaktteil und dem zweiten Kontaktteil angeordnet. Diese Wickel bilden die Reihenschaltung von Kondensatoren mit Mittelabgriff. Weiter ist mindestens ein Wickel zwischen dem ersten Kontaktteil und dem zweiten Kontaktteil angeordnet, d.h. parallel zur Reihenschaltung ist also mindestens ein weiterer Kondensator angeordnet. Weiter sind die Wickel zwischen dem ersten Kontaktteil und dem dritten Kontaktteil und die Wickel zwischen dem dritten Kontaktteil und dem zweiten Kontaktteil gleich aufgebaut und weisen eine erste Foliendicke auf. Der mindestens eine Wickel zwischen dem ersten Kontaktteil und dem zweiten Kontaktteil weist eine zweite Foliendicke auf, wobei die zweite Foliendicke kleiner als die doppelte erste Foliendicke ist. Hierdurch lässt sich ein sehr kompaktes Kondensatormodul mit einem Mittelabgriff realisieren. Dem liegt folgende Erkenntnis zugrunde. Die zu wählende Foliendicke ist abhängig von der maximalen Spannung. Die Foliendicke ist umgekehrt proportional zur Kapazität. Da die zweite Foliendicke des Wickels kleiner als die doppelte erste Foliendicke ist, ist die Kapazitätsdichte (Kapazität pro Volumen) des Wickels zwischen dem ersten und zweiten Kontaktteil größer als die Summe der beiden Wickel mit der ersten Foliendicke. Ein weiterer Vorteil ist, dass ein Großteil des Kommutierungsstromes über den Wickel zwischen erstem Kontaktteil und zweiten Kontaktteil fließen kann, der eine niedrigere Kommutierungsinduktivität aufweist als der Pfad über den Mittelabgriff. Vorzugsweise weist das Kondensatormodul mehr als drei Wickel auf. So kann das Kondensatormodul beispielsweise 6, 9, 12 oder 18 Wickel aufweisen.

In einer Ausführungsform bestehen die Folien der Wickel aus Polypropylen.

In einer weiteren Ausführungsform weisen die Kontaktteile jeweils drei Abgriffe auf, sodass jeweils ein Abgriff eines Kontaktteils mit einer Halbbrücke eines dreiphasigen 3-Level-Wechselrichters verbunden werden kann.

In einer weiteren Ausführungsform weisen alle Wickel die gleiche Höhe auf und sind in mindestens einer Reihe angeordnet, wobei Wickel und die Abgriffe alternierend angeordnet sind. Dies ermöglicht einen sehr niederinduktiven Aufbau. Im einfachsten Fall besteht dann das Kondensatormodul aus 9 Wickeln. Weiter kann parallel zur ersten Reihe mindestens eine zweite Reihe parallel geschaltet sein. Auch ist es denkbar, dass in der Reihe die Wickel nicht einzeln alternieren, sondern paarweise oder als Tripel. Dies führt aber zu entsprechend langen Bauformen des Kondensatormoduls.

In einer alternativen Ausführungsform weisen alle Wickel die gleiche Höhe auf und sind in mindestens einer Reihe angeordnet, wobei die Wickel zwischen dem ersten Kontaktteil und dem dritten Kontaktteil jeweils an den Enden der Reihe angeordnet sind. Die Wickel dazwischen sind über eine gemeinsame Kontaktfläche des zweiten Kontaktteils verbunden. Alternativ sind die Wickel zwischen dem dritten Kontaktteil und dem zweiten Kontaktteil an den Enden der Reihe angeordnet, wobei die Wickel dazwischen über eine gemeinsame Kontaktfläche des ersten Kontaktteils verbunden sind. Der Vorteil dieser Ausführungsform ist, dass die Anforderungen an die Isolation geringer sind, da die Anzahl der Potentialsprünge entlang der Reihe geringer ist als bei der zuvor beschriebenen Ausführungsform, wo die Wickel alternierend angeordnet sind. Auch bei dieser Ausführungsform können zwei oder mehr Reihen parallel geschaltet sein oder aber mehrere gleichartige Wickel hintereinander angeordnet sein.

In einer weiteren alternativen Ausführungsform weisen die Wickel zwischen dem ersten Kontaktteil und dem zweiten Kontaktteil eine Höhe auf, die doppelt so groß ist wie die Höhe der Wickel zwischen dem ersten Kontaktteil und dem dritten Kontaktteil und der Wickel zwischen dem dritten Kontaktteil und dem zweiten Kontaktteil. Dabei sind jeweils ein Wickel zwischen dem ersten Kontaktteil und dem dritten Kontaktteil und ein Wickel zwischen dem dritten und dem zweiten Kontaktteil übereinander angeordnet, wobei das erste Kontaktteil und das zweite Kontaktteil eine vollflächige Kontaktfläche aufweisen. Dies vereinfacht die Kontaktierung und das Kondensatormodul nutzt mehr die Höhe, um so ein sehr kompaktes Design zu ermöglichen.

In einer weiteren Ausführungsform ist das Kondensatormodul mit einem Isoliermaterial umhüllt, z.B. mit einer Vergussmasse vergossen oder mit einem Transfermold umspritzt.

Ein bevorzugtes Anwendungsgebiet des Kondensatormoduls ist z.B. als Zwischenkreiskondensator eines 3-Level-Wechselrichters oder in einem DC/DC-Wandler mit einem Neutalpunkt.

Die Erfindung wird nachfolgend anhand bevorzugter Ausführungsbeispiele näher erläutert. Die Figuren zeigen:
- Fig. 1: eine schematische Darstellung des grundsätzlichen Aufbaus des Kondensatormoduls,
- Fig. 2: eine schematische Darstellung eines Kondensatormoduls in einer ersten Ausführungsform,
- Fig. 3: eine schematische Darstellung eines Kondensatormoduls in einer zweiten Ausführungsform und
- Fig. 4: eine schematische Darstellung eines Kondensatormoduls in einer dritten Ausführungsform.

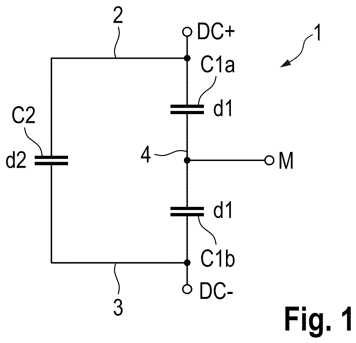

In der Fig. 1 ist schematisch ein Schaltbild eines Kondensatormoduls 1 dargestellt, wobei die Kondensatoren C1a, C1b und C2 als Wickel ausgebildet sind. Dabei sind die Kondensatoren C1a, C1b in Reihe geschaltet, wobei parallel zur Reihenschaltung von C1a und C1b der Kondensator C2 geschaltet ist. Das Kondensatormodul 1 weist ein erstes Kontaktteil 2 auf, das mit einem positiven Potential DC+ verbunden ist. Weiter weist das Kondensatormodul 1 ein zweites Kontaktteil 3 auf, das mit einem negativen Potential DC- verbunden ist. Schließlich weist das Kondensatormodul 1 ein drittes Kontaktteil 4 auf, das einen Mittelabgriff M bildet. Die Kondensatoren C1a, C1b weisen jeweils eine erste Foliendicke d1 auf, wohingegen der Kondensator C2 eine zweite Foliendicke d2 aufweist, wobei gilt: $d 2 > d 1$ und d2 < 2 · d1

Weiter gilt allgemein: $C = \frac{{ε}_{0} ⋅ {ε}_{r} ⋅ A}{d} ,$ wobei d die Dicke der Folie ist (die vorzugsweise aus Polypropylen ist) und A die ausgerollte Fläche des Wickels ist. Aufgrund der Tatsache, dass d2 < 2 · d1 ist, ist die Kapazitätsdichte (Kapazität durch Volumen) von C2 größer als die Summe der beiden Kondensatoren C1a, C1b, sodass ein kompakteres Kondensatormodul 1 bei vorgegebener Gesamtkapazität erreicht werden kann.

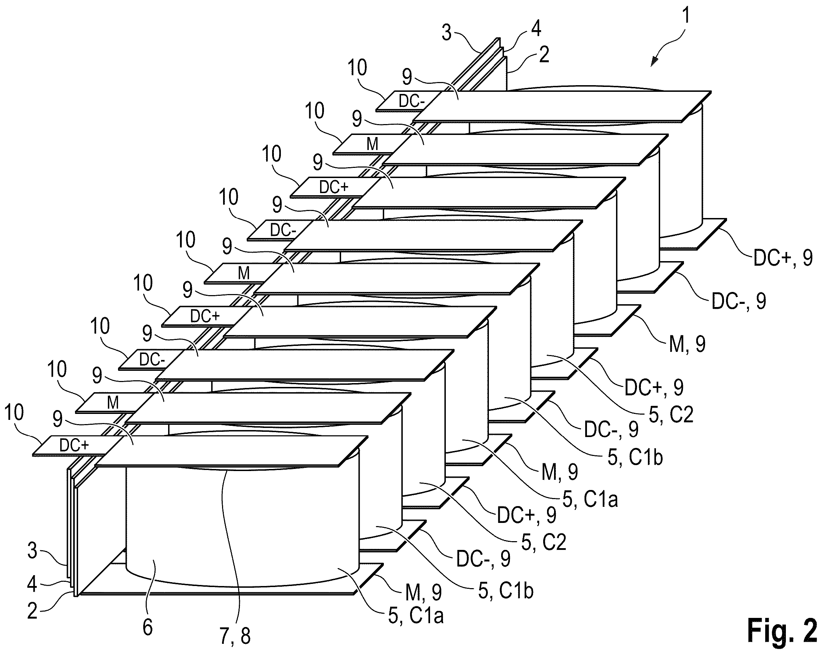

In der Fig. 2 ist nun schematisch ein Kondensatormodul 1 in einer ersten Ausführungsform dargestellt. Das Kondensatormodul 1 weist im dargestellten Beispiel neun Wickel 5 auf, wobei die verschiedenen Wickel 5 zusätzlich mit den Bezeichnungen für die Kondensatoren C1a, C1b und C2 gemäß Fig. 1 gekennzeichnet wurden. Die Wickel 5 weisen dabei alle die gleiche Höhe h1 auf. Die Mantelfläche 6 der Wickel 5 ist elektrisch isoliert und die Stirnseiten 7 weisen Elektroden 8 auf, wobei nur die obere Stirnseite 7 des vorderen Wickels 5 mit einem Bezugszeichen versehen wurde. Die neun Wickel 5 sind in einer Reihe angeordnet. Weiter weist das Kondensatormodul 1 ein erstes Kontaktteil 2, ein zweites Kontaktteil 3 und ein drittes Kontaktteil 4 auf. Die Kontaktteile 2-4 sind voneinander elektrisch getrennt, wobei in den Bereichen, wo diese sehr dicht beieinander angeordnet sind, beispielsweise Isolationspapier zwischen den Kontaktteilen 2-4 angeordnet ist. Die Kontaktteile 2-4 weisen Laschen 9 auf, die die Stirnseiten 7 der Wickel 5 oben und unten kontaktieren. Laschen 9 und Elektroden 8 sind beispielsweise verlötet oder verschweißt. Weiter weist jedes Kontaktteil 2-4 drei Abgriffe 10 auf, die dann jeweils mit einer Halbbrücke eines 3L-Wechselrichters verbunden sind. Dabei sind die Abgriffe 10 der drei Kontaktteile 2-4 alternierend angeordnet. Auch die Wickel 5 für die Kondensatoren C1a, C1b und C2 sind alternierend angeordnet. Durch diese Anordnung fließt der Kommutierungsstrom aus den drei Halbbrücken unmittelbar direkt in einen zugeordneten Kondensator, sodass die Stromwege sehr kurz sind und die Kommutierungsinduktivität entsprechend klein ist. Wie leicht ersichtlich, kann das Kondensatormodul 1 einfach durch eine weitere parallele Reihe von Wickeln 5 erweitert werden, wobei hierzu nur einfach die Laschen 9 verlängert werden müssen. Des Weiteren kann auch vorgesehen sein, dass jedem Wickel 4 in der Reihe ein oder zwei weitere Wickel 5 zugeordnet werden. Hierzu müssen dann einfach nur die Laschen 9 breiter gemacht werden.

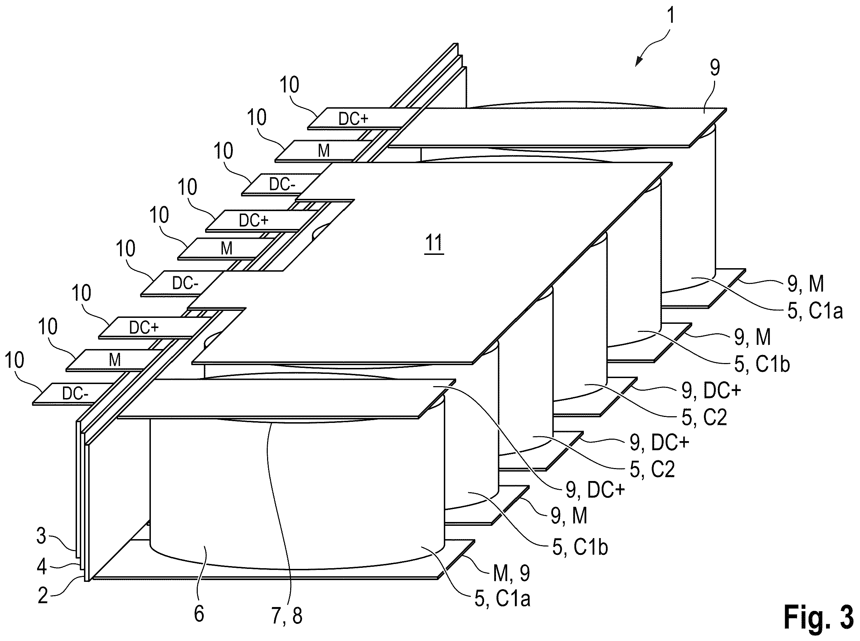

In der Fig. 3 ist eine alternative Ausführungsform für ein Kondensatormodul 1 dargestellt, das sechs Wickel 4 aufweist, die alle die gleiche Höhe aufweisen. Die Wickel sind wieder in einer Reihe angeordnet. Dabei sind die beiden Wickel 5, C1a, die zwischen dem ersten Kontaktteil 2 und dem dritten Kontaktteil 4 angeordnet sind, am Anfang und am Ende der Reihe angeordnet. Entsprechend sind die oberen Laschen 9 mit DC+ verbunden und die unteren Laschen 9 mit dem Mittelabgriff M bzw. dritten Kontaktteil 4 verbunden. Daneben ist jeweils ein Wickel 5, C1b angeordnet, der zwischen dem dritten Kontaktteil 4 und dem zweiten Kontaktteil 3 angeordnet ist, wobei die beiden Wickel 5, C2, die zwischen dem ersten Kontaktteil 2 und dem zweiten Kontaktteil 3 angeordnet sind, in der Reihe mittig angeordnet sind. Die vier mittigen Wickel 5, C1b, C2 sind an den oberen Stirnflächen 7 mit einer gemeinsamen Kontaktfläche 11 als Bestandteil des zweiten Kontaktteils 3 verbunden. An der Unterseite sind die Wickel 5 mit den entsprechenden Kontaktlaschen 9 verbunden, die hier als einzelne Laschen 9 ausgebildet sind. Wie man erkennt, sind jeweils zwei benachbarte Laschen 9 aus dem gleichen Kontaktteil 4, 2 und 4 ausgeformt. Diese können daher paarweise zu einer gemeinsamen, breiteren Lasche 9 jeweils zusammengefasst werden. Der Vorteil dieser Ausführungsform ist die einfachere Fertigung. Des Weiteren ist die Isolierung zwischen den verschiedenen Potentialen DC+, DC-und M einfacher, da es weniger Potentialwechsel gibt als bei der Ausführungsform gemäß Fig. 2. An der Oberseite gibt es nur die Wechsel DC+, DC-, DC+ und an der Unterseite M, DC+, M. Das Kondensatormodul 1 kann leicht erweitert werden, indem einfach eine weitere Reihe von Wickeln 5 parallel angeordnet wird und die Laschen 9 bzw. die Kontaktfläche 11 verlängert werden.

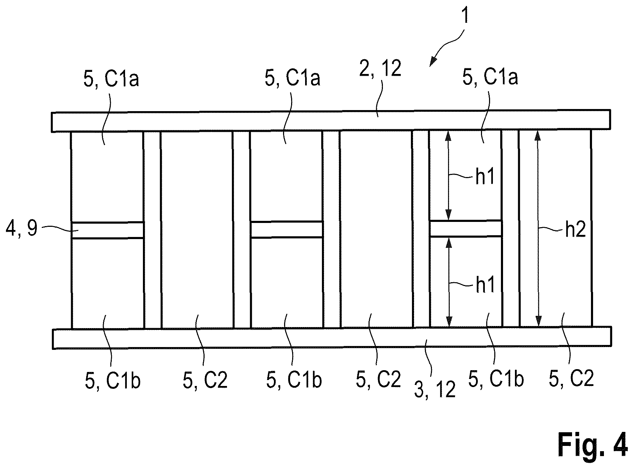

In der Fig. 4 ist schematisch eine weitere alternative Ausführungsform für ein Kondensatormodul 1 in einer Seitenansicht dargestellt. Dabei weisen die Wechsel 5 für die Kondensatoren C1a, C1b eine erste Höhe h1 auf, wobei die Wickel 5 für die Kondensatoren C2 eine zweite Höhe h2 aufweisen. Die zweite Höhe h2 ist dabei ca. doppelt so hoch wie die erste Höhe h1. Dies wird später noch näher erläutert. Die Wickel 5 für die Kondensatoren C1a, C1b sind paarweise übereinander angeordnet, wobei zwischen diesen eine Lasche 9 des dritten Kontaktteils 4 angeordnet ist. Der Vorteil dieser Anordnung ist, dass die Höhe ausgenutzt wird, sodass das Kondensatormodul 1 bei gleicher Anzahl von Wickeln 5 nicht so lang ist wie die Ausführungen gemäß Fig. 2 oder Fig. 3. Ein weiterer Vorteil ist, dass die Kontakte des ersten Kontaktteils 2 und des zweiten Kontaktteils 3 als vollflächige Kontaktflächen 12 ausgebildet sein können (gegebenenfalls mit Löchern oder anderen Öffnungen zur Durchführung der Kontaktierung). Im dargestellten Beispiel ist die Summe der beiden ersten Höhen h1 etwas kleiner als die zweite Höhe h2, da noch die Dicke der Lasche 9 des dritten Kontaktteils 4 zu berücksichtigen ist, die aber im Vergleich zu den Höhen h1, h2 vernachlässigbar ist. Daher gilt h2 ≈ 2 · h1, wobei die Abweichung kleiner 10 % ist. Sind die beiden ersten Höhen h1 genau halb so hoch wie die zweite Höhe h2, d.h. h2 = 2 · h1, so muss die Dicke der Laschen 9 durch eine Strukturierung der ersten und zweiten Kontaktteile 2, 3 kompensiert werden, indem mindestens ein Kontaktteil 2, 3 im Bereich der Kondensatoren C2 eine Ausbuchtung aufweist.

### Bezugszeichenliste

- 1: Kondensatormodul
- 2: erstes Kontaktteil
- 3: zweites Kontaktteil
- 4: drittes Kontaktteil
- 5: Wickel
- 6: Mantelfläche
- 7: Stirnseite
- 8: Elektrode
- 9: Lasche
- 10: Abgriff
- 11: Kontaktfläche
- 12: Kontaktfläche
- d1: erste Foliendicke
- d2: zweite Foliendicke
- h1: erste Höhe
- h2: zweite Höhe
- C1a: Kondensator
- C1b: Kondensator
- C2: Kondensator
- DC+: positives Potential
- DC-: negatives Potential
- M: Mittelabgriff

## Patentansprüche

1. Kondensatormodul (1), wobei das Kondensatormodul (1) mindestens drei als Wickel (5) ausgebildete Kondensatoren (C1a, C1b, C2) aufweist, wobei die Wickel (5) jeweils an den Stirnseiten (7) eine Elektrode (8) aufweisen und die Mantelfläche (6) der Wickel (5) elektrisch isoliert ist, wobei das Kondensatormodul (1) ein erstes Kontaktteil (2), ein zweites Kontaktteil (3) und ein drittes Kontaktteil (4) aufweist, wobei das erste Kontaktteil (2) zum Anschließen an ein positives Potential (DC+), das zweite Kontaktteil (3) zum Anschließen an ein negatives Potential (DC-) und das dritte Kontaktteil (4) einen Mittelabgriff (M) bildet, wobei mindestens ein Wickel (5) zwischen dem ersten Kontaktteil (2) und dem dritten Kontaktteil (4), mindestens ein Wickel (5) zwischen dem dritten Kontaktteil (4) und dem zweiten Kontaktteil (3) und mindestens ein Wickel (5) zwischen dem ersten Kontaktteil (2) und dem zweiten Kontaktteil (3) angeordnet ist, wobei die Wickel (5) zwischen dem ersten Kontaktteil (2) und dem dritten Kontaktteil (4) und die Wickel (5) zwischen dem dritten Kontaktteil (4) und dem zweiten Kontaktteil (3) gleich aufgebaut sind und eine erste Foliendicke (d1) aufweisen, wobei der mindestens eine Wickel (5) zwischen dem ersten Kontaktteil (2) und dem zweiten Kontaktteil (3) eine zweite Foliendicke (d2) aufweist, wobei die zweite Foliendicke (d2) kleiner als die doppelte erste Foliendicke (d1) ist.

2. Kondensatormodul nach Anspruch 1, **dadurch gekennzeichnet, dass** die Folien der Wickel (5) aus Polypropylen bestehen.

3. Kondensatormodul nach Anspruch 1 oder 2, **dadurch gekennzeichnet, dass** die Kontaktteile (2-4) jeweils drei Abgriffe (10) aufweisen.

4. Kondensatormodul nach einem der vorangegangenen Ansprüche, **dadurch gekennzeichnet, dass** alle Wickel (5) die gleiche Höhe (h1) aufweisen und in mindestens einer Reihe angeordnet sind, wobei Wickel (5) und die Abgriffe (10) alternierend angeordnet sind.

5. Kondensatormodul nach einem der Ansprüche 1 bis 3, **dadurch gekennzeichnet, dass** alle Wickel (5) die gleiche Höhe (h1) aufweisen und in mindestens einer Reihe angeordnet sind, wobei die Wickel (5) zwischen dem ersten Kontaktteil (2) und dem dritten Kontaktteil (4) oder die Wickel (5) zwischen dem dritten Kontaktteil (4) und dem zweiten Kontaktteil (3) jeweils an den Enden der Reihe angeordnet sind, wobei die Wickel (5) zwischen den Wickeln (5) an den Enden über eine gemeinsame Kontaktfläche (11) des zweiten Kontaktteils (3) oder des ersten Kontaktteils (2) verbunden sind.

6. Kondensatormodul nach einem der Ansprüche 1 bis 3, **dadurch gekennzeichnet, dass** die Wickel (5) zwischen dem ersten Kontaktteil (2) und dem zweiten Kontaktteil (3) eine Höhe (h2) aufweisen, die ungefähr doppelt so groß ist wie die Höhe (h1) der Wickel (5) zwischen dem ersten Kontaktteil (2) und dem dritten Kontaktteil (4) und zwischen dem dritten Kontaktteil (4) und dem zweiten Kontaktteil (3), wobei jeweils ein Wickel (5) zwischen dem ersten Kontaktteil (2) und dem dritten Kontaktteil (4) und ein Wickel (5) zwischen dem dritten Kontaktteil (4) und dem zweiten Kontaktteil (3) übereinander angeordnet sind, wobei das erste Kontaktteil (2) und das zweite Kontaktteil (3) eine vollflächige Kontaktfläche (12) aufweisen.

7. Kondensatormodul nach einem der vorangegangenen Ansprüche, **dadurch gekennzeichnet, dass** das Kondensatormodul (1) mit einem Isoliermaterial umhüllt ist.

8. Schaltungsanordnung, umfassend einen 3-Level-Wechselrichter mit einem Zwischenkreiskondensator, wobei der Zwischenkreiskondensator als ein Kondensatormodul nach einem der Ansprüche 1 bis 7 ausgebildet ist.
